# EUROPÄISCHE PATENTSCHRIFT

(11) **EP 2 199 570 B1**
(45) Veröffentlichungstag und Bekanntmachung des Hinweises auf die Patenterteilung: **03.07.2013**
(21) Anmeldenummer: 09178152.6
(22) Anmeldetag: 07.12.2009
(51) Int. Cl.: F02C 6/12, F01D 17/16

(54) **Ladeeinrichtung**
Charging device
Dispositif de chargement

(30) Priorität: 20.12.2008 DE 102008064299
(43) Veröffentlichungstag der Anmeldung: 23.06.2010
(73) Patentinhaber: Bosch Mahle Turbo Systems GmbH & Co. KG, 70376 Stuttgart (DE)
(72) Erfinder: Tries, Timo, 71701 Schwieberdingen (DE); Haußer, Jasmin, 70734 Fellbach (DE)
(74) Vertreter: Bernhard, Uwe

(56) Entgegenhaltungen:
- WO-A1-2006/046892
- WO-A1-2007/104535
- WO-A2-2007/111759
- US-A1- 2006 010 880

## Beschreibung

Die vorliegende Erfindung betrifft eine Ladeeinrichtung, insbesondere einen Abgasturbolader für ein Kraftfahrzeug, gemäß dem Oberbegriff des Anspruchs 1.

In modernen Kraftfahrzeugen werden zunehmend sog. Abgasturbolader mit variablen Turbinengeometrien eingesetzt, bei welchen die Leistungsabgaben und das Ansprechverhalten an unterschiedliche Betriebsbedingungen des Verbrennungsmotors angepasst werden kann. Die dabei eingesetzten variablen Turbinengeometrien weisen meist drehbare Leitschaufeln auf und sind üblicherweise mittels einer Federeinrichtung, insbesondere mittels einer Tellerfeder, gegenüber einem Lager- und/oder einem Turbinengehäuse der Ladeeinrichtung verspannt. Aufgrund der hohen Temperaturen beim Betrieb der Ladeeinrichtung, kann es jedoch zu einem Abfallen der Federkraft der Tellerfeder kommen, wodurch die Funktionsweise der Ladeeinrichtung beeinträchtigt werden kann.

Aus der EP 1 672 177 A1 ist ein gattungsgemäßer Abgasturbolader mit einer in einem Turbinengehäuse angeordneten Kartusche für die variable Turbinengeometrie bekannt. Die variable Turbinengeometrie wird dabei mittels einer Scheibenfeder fixiert, die aus zumindest zwei Materiallagen aufgebaut ist. Die eine Materiallage ist dabei dazu da, die axiale Vorspannkraft aufzubringen, während die andere Materiallage lediglich dazu da ist, als Hitzeschutzschild für die federnde Materiallage zu dienen. Die Herstellung einer derartigen Tellerfeder ist dabei jedoch aufwendig und deshalb teuer.

Ein weiterer Abgasturbolader mit einem elastischen Hitzeschild, welder sowhol gegen ein Lagergehäuse als auch gegen einen Statoring anliegt, ist in der WO 2006/046892 A1 offenbart.

Die vorliegende Erfindung beschäftigt sich mit dem Problem, für eine Ladeeinrichtung der gattungsgemäßen Art, eine verbesserte Ausführungsform anzugeben, welche insbesondere kostengünstiger herzustellen ist.

Dieses Problem wird erfindungsgemäß durch den Gegenstand des unabhängigen Anspruchs 1. gelöst. Vorteilhafte Ausführungsformen sind Gegenstand der abhängigen Ansprüche.

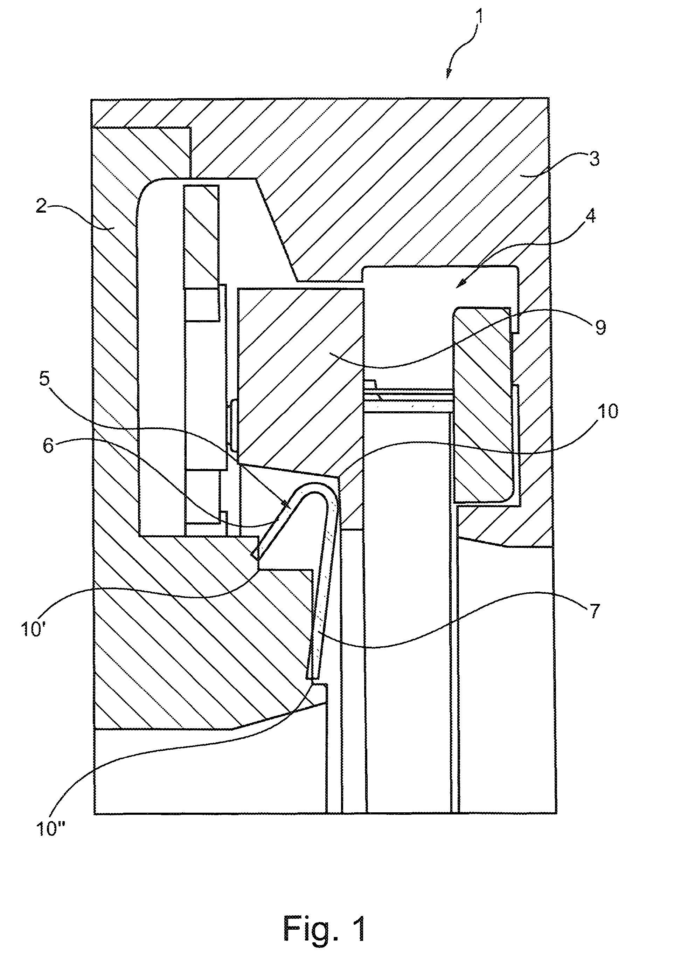

Die Erfindung beruht auf dem allgemeinen Gedanken, bei einer Ladeeinrichtung mit einer variablen Turbinengeometrie eine einstückige und aus Blech ausgebildete Tellerfeder mit einem umgebogenen Randbereich einzusehen, wobei der umgebogene Randbereich einen Federschenkel bildet, während der im Vergleich zum Federschenkel gemäß der Fig. 1 radial verlaufende Schutzschenkel der Tellerfeder als Hitzeschutzschild für den Federschenkel ausgebildet ist. Der Federschenkel stützt sich dabei einerseits an einem Lagergehäuse der Ladeeinrichtung und andererseits an der variablen Turbinengeometrie ab und spannt letztere gegen das Turbinengehäuse vor. Denkbar ist selbstverständlich auch, dass die Tellerfeder die variable Turbinengeometrie gegen einen Leitschaufelkäfig oder an eine Deckscheibe vorspannt. Durch die einstückig und aus Blech ausgebildete Tellerfeder, welche mittels eines späteren Umformvorgangs ihren umgebogenen Randbereich erhält, kann eine temperaturunempfindliche, das heißt äußerst widerstandsfähige Tellerfeder geschaffen werden, die ihre Federkraft auch unter langer, hoher thermischer Belastung beibehält. Der Begriff "umgebogen" soll dabei lediglich rein exemplarisch für unterschiedliche Umformverfahren verstanden werden, sodass auch ein umgebördelter oder abgekröpfter Randbereich unter der Erfindung subsumiert werden kann. Die derart hergestellte Tellerfeder ist konstruktiv einfach aufgebaut und mittels eines einfachen Umformverfahrens in Form gebracht und dadurch äußerst kostengünstig herzustellen. Darüber hinaus bewirkt der Schutzschenkel der Tellerfeder einen Schutz vor zu hohen Temperaturen, wodurch die Tellerfeder wiederum bezüglich ihrer Leistung und ihrer Lebensdauer verbessert werden kann. Die erfindungsgemäße Tellerfeder ist dabei im Unterschied zum Stand der Technik nicht aus zwei unterschiedlichen Materialien, sondern aus lediglich einem einzigen Material hergestellt.

Bei einer vorteilhaften Weiterbildung der erfindungsgemäßen Lösung, ist der umgebogene Randbereich der Tellerfeder in Umfangsrichtung unterbrochen ausgebildet und weist mehrere Laschen auf. Die in Umfangsrichtung vorgesehenen Unterbrechungen können dabei einfach mittels eines entsprechenden Stanzverfahrens bei zunächst noch ebener Tellerfeder hergestellt werden, wobei die hier ausgestanzten Laschen in einem späteren Umformschritt einfach umgebogen werden können. Selbstverständlich ist dabei alternativ auch denkbar, dass der umgebogene Randbereich in Umfangsrichtung geschlossen ausgebildet ist, wodurch sich zwar höhere Eigenspannungen, hervorgerufen durch den Umformprozess, einstellen, die Federkraft der erfindungsgemäßen Tellerfeder insgesamt jedoch gesteigert werden kann. Unabhängig davon, ob der umgebogene Randbereich in Umfangsrichtung geschlossen oder unterbrochen ausgebildet ist, können jedoch beide Alternativen fertigungstechnisch einfach und dadurch kostengünstig hergestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Ladeeinrichtung im Bereich einer variablen Turbinengeometrie,
- Fig. 2, 3: unterschiedlich ausgestaltete Tellerfedern,
- Fig. 4: eine Schnittdarstellung durch eine Tellerfeder gemäß der Fig. 2,
- Fig. 5: eine Darstellung wie in Fig. 1, jedoch bei einer anderen Ausführungsform,
- Fig. 6, 7: unterschiedlich ausgestaltete Tellerfedern,
- Fig. 8: eine Darstellung wie in Fig. 1, jedoch bei einer weiteren Ausführungsform,
- Fig. 9, 10: unterschiedlich ausgestaltete Tellerfedern.

Entsprechend der Fig. 1, weist eine erfindungsgemäße Ladeeinrichtung 1, welche insbesondere als Abgasturbolader für ein Kraftfahrzeug ausgebildet sein kann, ein an ein Lagergehäuse 2 angrenzendes Turbinengehäuse 3 auf, in welchem eine variable Turbinengeometrie 4 angeordnet ist. Erfindungsgemäß ist nun eine einstückige, das heißt aus einem einzigen durchgehenden Material ausgebildete, Tellerfeder 5 aus Blech mit einem außen umgebogenen Randbereich vorgesehen, wobei der umgebogene Randbereich einen Federschenkel 6 bildet, während der im Vergleich zum Federschenkel 6 radiale Schutzschenkel 7 als Hitzeschutzschild für den Federschenkel 6 dient. Selbstverständlich kann der Schutzschenkel 7 auch anders herum, das heißt innen, gebogen ausgeführt sein. Der Federschenkel 6 stützt sich dabei einerseits am Lagergehäuse 2 und andererseits an der variablen Turbinengeometrie 4 ab und spannt letztere gegen das Turbinengehäuse 3 vor.

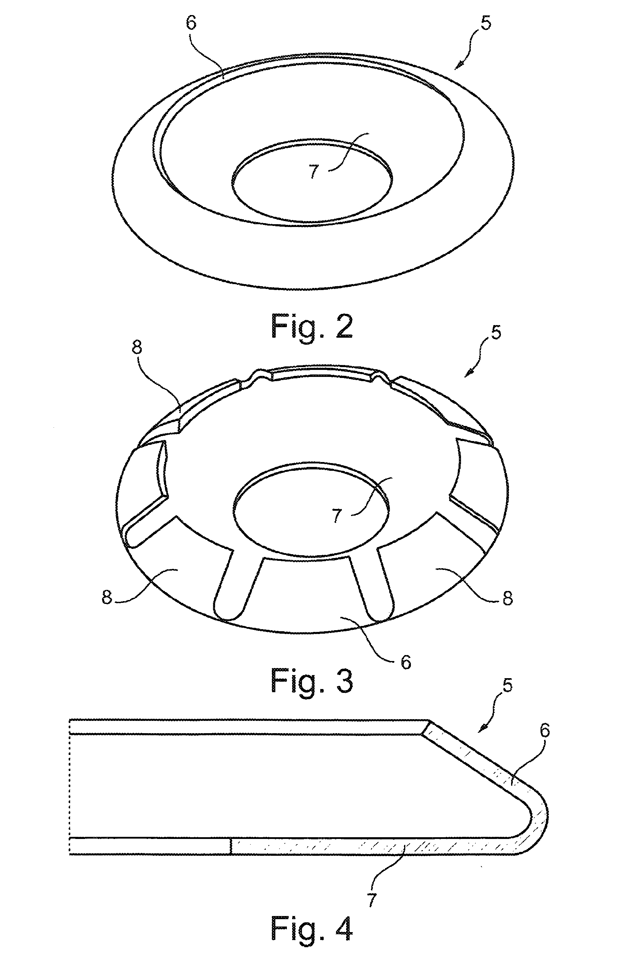

Prinzipiell kann dabei die Tellerfeder 5 unterschiedliche Ausgestaltungen aufweisen, wie dies beispielsweise gemäß den Fig. 2 und 3 dargestellt ist. Bei der Tellerfeder 5 gemäß der Fig. 2 ist der umgebogene Randbereich in Umfangsrichtung geschlossen, während dieser umgebogene Randbereich gemäß der Fig. 3 in Umfangsrichtung unterbrochen ausgebildet ist und mehrere Laschen 8 aufweist. Unter dem Begriff "umgebogen" soll dabei selbstverständlich nicht nur ein Biegeverfahren verstanden werden, sodass der Randbereich beispielsweise auch abgekröpft oder umgebördelt oder gespengelt ausgeführt sein kann.

Die gemäß der Fig. 3 dargestellten Laschen 8, werden üblicherweise beim Ausstanzen der Grundform der Tellerfeder 5 mit ausgestanzt und anschließend umgebogen. Demgegenüber wird bei einer Tellerfeder 5 gemäß der Fig. 2 der Randbereich komplett umgebogen, wobei es zu nicht unerheblichen Spannungen während des Umformvorgangs kommen kann. Diese Spannungen können jedoch im Weiteren zu einer Festigkeitssteigerung der Tellerfeder 5 beitragen.

Betrachtet man die Fig. 1 weiter, so kann man erkennen, dass sich sowohl der Federschenkel 6 als auch der Schutzschenkel 7 am Lagergehäuse 2 der Ladeeinrichtung 1 abstützen, während ein Schaufellagerring 9 der variablen Turbinengeometrie 4 eine geeignete Anlagefläche 10, insbesondere eine Radialstufe, aufweist, an der die Tellerfeder 5 anderen Endes anliegt.

Von besonderem Vorteil bei der erfindungsgemäßen Tellerfeder 5 ist, dass diese einerseits einfach und kostengünstig herzustellen ist und andererseits ihre federnde Wirkung langfristig erhalten bleibt, da der Schutzschenkel 7 als Hitzeschutzschild für den Federschenkel 6 wirkt. Hierdurch kann insbesondere an der Anlagestelle der Tellerfeder 5 am Schaufellagerring 9 die Temperatur in der Tellerfeder 5 gesenkt werden, was sowohl deren Federkraft als auch deren Lebensdauer erhöht. Generell ist dabei die erfindungsgemäße Tellerfeder 5 sowohl für Diesel- als auch für Ottomotoren einsetzbar.

Ähnlich wie an der Anlagefläche 10 des Schaufellagerrings 9, können auch am Lagergehäuse 2 Anlageflächen 10' und 10" vorgesehen sein, an welchen jeweils der Federschenkel 6 bzw. der Schutzschenkel 7 anliegt, um einen gewissen Dichteffekt zu erzielen. Durch die mittels der Tellerfeder 5 erzeugte Vorspannkraft, wird die variable Turbinengeometrie 4 in Richtung des Turbinengehäuses 3 gepresst und dadurch in Lage gehalten. Selbstverständlich kann eine derartige Tellerfeder 5 generell auch zu weiteren Fixierzwecken bei einer Ladeeinrichtung 1 eingesetzt werden, insbesondere beispielsweise zur Fixierung einer Lagerscheibe oder einer variablen Turbinengeometrie.

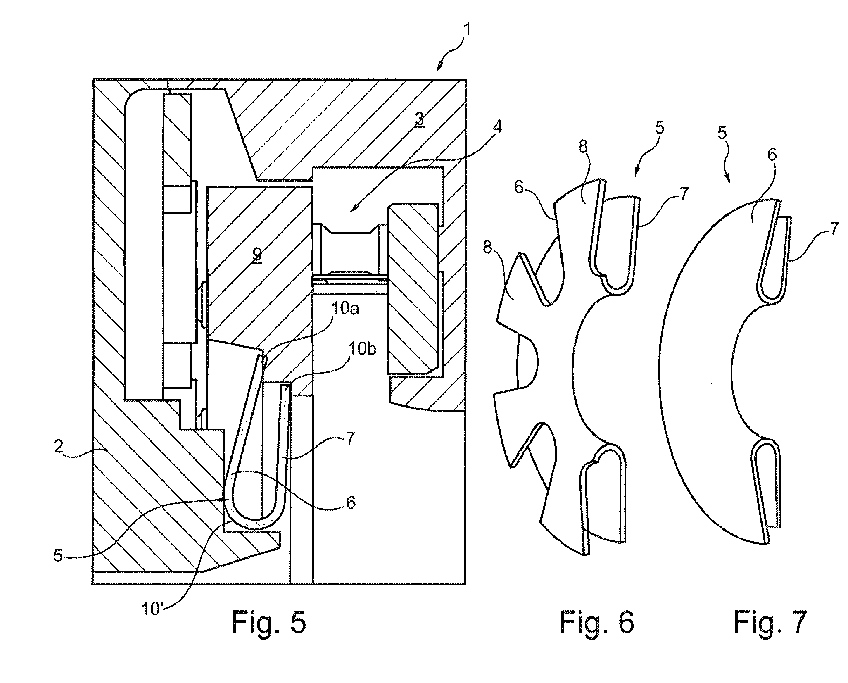

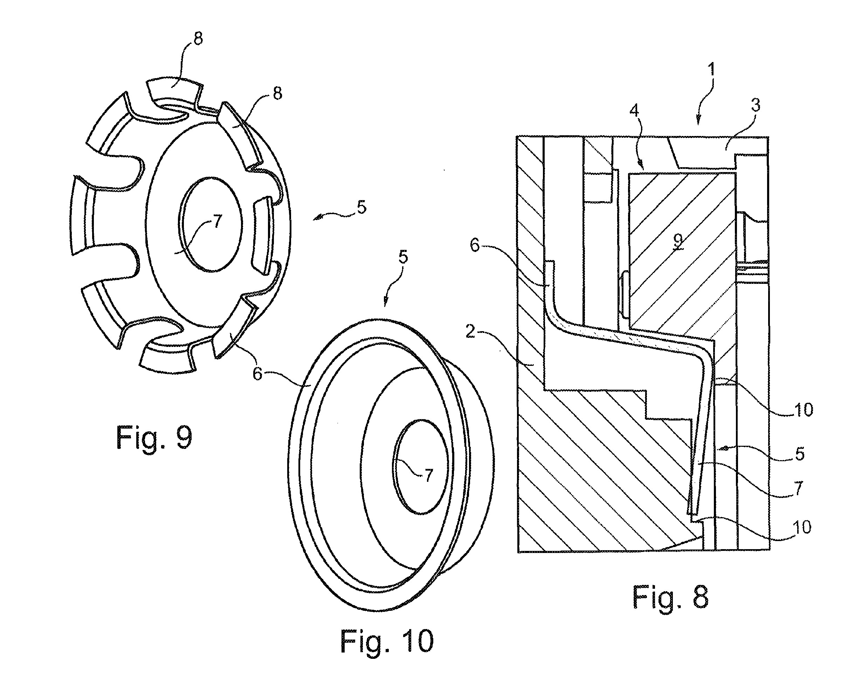

Entsprechend den Fig. 5 und 8, weist die erfindungsgemäße Ladeeinrichtung 1, ebenfalls ein an das Lagergehäuse 2 angrenzendes Turbinengehäuse 3 auf, in welchem die variable Turbinengeometrie 4 angeordnet ist. Erfindungsgemäß ist nun eine einstückige, das heißt aus einem einzigen durchgehenden Material ausgebildete, Tellerfeder 5 aus Blech mit einem innen umgebogenen Randbereich (vgl. Fig. 5) vorgesehen, an den umgebogenen Randbereich der Federschenkel 6 angrenzt, während der im Vergleich zum Federschenkel 6 radiale Schutzschenkel 7 als Hitzeschutzschild für den Federschenkel 6 dient. Der Federschenkel 6 stützt sich dabei einerseits am Lagergehäuse 2 und andererseits an der variablen Turbinengeometrie 4 ab und spannt letztere gegen das Turbinengehäuse 3 vor.

Prinzipiell kann dabei die Tellerfeder 5 unterschiedliche Ausgestaltungen aufweisen, wie dies beispielsweise gemäß den Fig. 6 und 7 dargestellt ist. Bei der Tellerfeder 5 gemäß der Fig. 6 ist der umgebogene Randbereich in Umfangsrichtung geschlossen, während dieser umgebogene Randbereich gemäß der Fig. 7 in Umfangsrichtung unterbrochen ausgebildet ist und mehrere Laschen 8 aufweist. Dies gilt in gleicher Weise auch für die gemäß den Fig. 9 und 10 dargestellten Tellerfedern 5.

Betrachtet man die Fig. 5 weiter, so kann man erkennen, dass sich sowohl der Federschenkel 6 als auch der Schutzschenkel 7 am Schaufellagerring 9 der Ladeeinrichtung 1 abstützen, und zwar im Bereich von Anlageflächen 10a und 10b, die insbesondere in der Art einer Radialstufe ausgebildet sind.

Generell liegt dabei der Schutzschenkel 7 der Tellerfeder 5 am Lagergehäuse 2 an, sofern eine Dichtfunktion gewünscht ist, muss aber nicht, sofern beispielsweise keine Dichtung erforderlich ist.

## Patentansprüche

1. Abgasturbolader für ein Kraftfahrzeug, mit einem an ein Lagergehäuse (2) angrenzenden Turbinengehäuse (3), in dem eine variable Turbinengeometrie (4) angeordnet ist,
wobei
- eine einstückige Tellerfeder (5) aus Blech mit zumindest einem umgebogenen Randbereich vorgesehen ist, wobei der umgebogene Randbereich einen Federschenkel (6) bildet, während ein Schutzschenkel (7) als Hitzeschutz für den Federschenkel (6) ausgebildet ist, **dadurch gekennzeichnet**
- **dass** sich der Federschenkel (6) einerseits am Lagergehäuse (2) und andererseits an der variablen Turbinengeometrie (4) abstützt und letztere gegen das Turbinengehäuse (3), eine Deckscheibe oder einen Leitschaufelkäfig vorspannt,
- **dass** der umgebogene Randbereich außen angeordnet ist und sich die Tellerfeder (5) einerseits mit ihrem Federschenkel (6) und ihrem Schutzschenkel (7) an Anlageflächen (10',10") des Lagergehäuse (2) und andereseits an einer Anlagefläche (10) des Schaufellagerrings (9) abstützt, oder
- **dass** dass der umgebogene Randbereich innen angeordnet ist und sich die Tellerfeder (5) einerseits mit ihrem Federschenkel (6) und ihrem Schutzschenkel (7) an Anlageflächen (10a,10b) am Schaufellagerring (9) und andereseits an einer Anlagefläche (10') am Lagergehäuse (2) abstützt,
um einen gewissen Dichteffekt zu erzielen.

2. Abgasturbolader nach Anspruch 1,
**dadurch gekennzeichnet,**
**dass** der umgebogene Randbereich in Umfangsrichtung geschlossen ausgebildet ist.

3. Abgasturbolader nach Anspruch 1,
**dadurch gekennzeichnet,**
**dass** der umgebogene Randbereich in Umfangsrichtung unterbrochen ausgebildet ist und mehrere Laschen (8) aufweist.

4. Abgasturbolader nach einem der Ansprüche 1 bis 3,
**dadurch gekennzeichnet,**
**dass** die Tellerfeder (5) als Hitzeschutzschild ausgebildet ist.

## Claims

1. An exhaust gas turbocharger for a motor vehicle, with a turbine housing (3) adjoining a bearing housing (2), in which a variable turbine geometry (4) is arranged,
- wherein a one-piece disc spring (5) of plate is provided with at least one bent-over marginal region, wherein the bent-over marginal region forms a spring leg (6), while a protective leg (7) is formed as heat shield for the spring leg (6), **characterized**
- **in that** the spring leg (6) supports itself on the one side on the bearing housing (2) and on the other side on the variable turbine geometry (4), preloading the latter against the turbine housing (3), a cover disc or a guide blade cage,
- **in that** the bent-over marginal region is arranged on the outside and the disc spring (5) on the one side supports itself with its leg spring (6) and its protective leg (7) on bearing surfaces (10', 10") of the bearing housing (2) and on the other side on a bearing surface (10) of the blade bearing ring (9), or
- **in that** the bent-over marginal region is arranged on the inside and the disc spring (5) on the one side supports itself with its spring leg (6) and its protective leg (7) on bearing surfaces (10a, 10b) on the blade bearing ring (9) and on the other side on a bearing surface (10') on the bearing housing (2) in order to achieve a certain sealing effect.

2. The exhaust gas turbocharger according to Claim 1, **characterized in that** the bent-over marginal region is formed closed in circumferential direction.

3. The exhaust gas turbocharger according to Claim 1, **characterized in that** the bent-over marginal region is formed interrupted in circumferential direction and comprises a plurality of straps (8).

4. The exhaust gas turbocharger according to any one of the Claims 1 to 3, **characterized in that** the disc spring (5) is formed as a heat shield.

## Revendications

1. Turbocompresseur de gaz d'échappement pour un véhicule automobile, comportant un logement de turbine (3) contigu à un logement de palier (2), dans lequel une géométrie de turbine variable (4) est disposée,
dans lequel
- une rondelle Belleville (5) en un seul tenant constituée de tôle avec au moins une zone de bord recourbée est prévue, dans lequel la zone de bord recourbée forme un pan de ressort (6), alors qu'un pan de protection (7) est réalisé comme un pan auxiliaire pour le pan de ressort (6), **caractérisé en ce que**
- le pan de ressort (6) s'appuie d'un côté sur le logement de palier (2) et d'un autre côté sur la géométrie de turbine variable (4) et précontraint cette dernière contre le logement de turbine (3), un disque de recouvrement ou une cage d'aube directrice,
- la zone de bord recourbée est disposée à l'extérieur et la rondelle Belleville (5) s'appuie d'un côté par son pan de ressort (6) et son pan de protection (7) sur des surfaces de positionnement (10',10") du logement de palier (2) et d'un autre côté sur une surface de positionnement (10) de l'anneau d'appui d'aube (9), ou
- la zone de bord recourbée est disposée à l'intérieur et la rondelle Belleville (5) s'appuie d'un côté par son pan de ressort (6) et son pan de protection (7) sur des surfaces de positionnement (10a,10b) sur l'anneau d'appui d'aube (9) et d'un autre côté sur une surface de positionnement (10') sur le logement de palier (2), afin de produire un effet d'étanchéité déterminé.

2. Turbocompresseur de gaz d'échappement selon la revendication 1, **caractérisé en ce que** la zone de bord recourbée a une configuration fermée dans la direction circonférentielle.

3. Turbocompresseur de gaz d'échappement selon la revendication 1, **caractérisé en ce que** la zone de bord recourbée a une configuration interrompue dans la direction circonférentielle et présente plusieurs languettes (8).

4. Turbocompresseur de gaz d'échappement selon une des revendications 1 à 3, **caractérisé en ce que** la rondelle Belleville (5) est conçue comme un écran de protection contre la chaleur.
